# EUROPÄISCHE PATENTSCHRIFT

(11) **EP 1 252 545 B1**
(45) Veröffentlichungstag und Bekanntmachung des Hinweises auf die Patenterteilung: **10.11.2010**
(21) Anmeldenummer: 01957696.6
(22) Anmeldetag: 29.06.2001
(51) Int. Cl.: G02B 27/01

(54) **ANZEIGEVORRICHTUNG**
DISPLAY DEVICE
DISPOSITIF D'AFFICHAGE

(30) Priorität: 27.07.2000 DE 10036570
(43) Veröffentlichungstag der Anmeldung: 30.10.2002
(73) Patentinhaber: ROBERT BOSCH GMBH, 70442 Stuttgart (DE)
(72) Erfinder: KNOLL, Peter, 76275 Ettlingen (DE); ESCHLER, Johannes, 71254 Ditzingen (DE); FIESS, Reinhold, 77770 Durbach (DE)
(86) Internationale Anmeldenummer: PCT/DE2001/002403
(87) Internationale Veröffentlichungsnummer: WO 2002/010837

(56) Entgegenhaltungen:
- EP-A- 0 312 094
- EP-A- 0 519 541
- EP-A- 0 724 174
- DE-A- 19 540 108
- FR-A- 2 726 094
- US-A- 3 357 769
- US-A- 4 793 687
- US-A- 4 908 611

## Beschreibung

### Stand der Technik

Die Erfindung geht aus von einer Anzeigevorrichtung nach der Gattung dies Hauptanspruchs. Es sind schon Anzeigevorrichtungen in Fahrzeugen bekannt, bei denen ein für einen Beobachter sichtbares virtuelles Bild dadurch erzeugt wird, dass von einer Projektionseinheit Licht auf eine verspiegelte Fläche projiziert wird. Hinter der Ebene des Spiegels entsteht hierbei ein für einen Betrachter sichtbares virtuelles Bild. Eine hierfür erforderliche Einheit zur Lichterzeugung bzw. Projektion ist im Allgemeinen im Dashboard des Fahrzeugs, also hinter dem lenkrad und unterhalb der Windschutzscheibe angeordnet. Insbesondere werden Fahrzeugdaten, z.B. die aktuelle Fahrzeuggeschwindigkeit, in einer solchen Anzeige dargestellt. Als reflektierende Flächen, auf die das virtuelle Bild projiziert wird, werden einerseits die Windschutzscheibe oder andererseits zusätzliche, reflektierende Elemente, sogenannte Combiner, verwendet.

Aus der DE 43 23 571 A1 ist ein Anzeigesystem für ein Fahrzeug bekannt, bei dem Anzeigelicht von einer an dem Innendach des Fahrzeugs angebrachten Anzeigeeinheit durch eine auf der Instrumententafel montierte reflektierende Einrichtung reflektiert wird und von der Windschutzscheibe zu den Augen eines Fahrers in dem Fahrzeug reflektiert wird.

Aus der EP 0 312 094 A2 ist eine Bildwiedergabeeinrichtung für Kraftfahrzeuge bekannt, bei der ein reales Bild mittels einer Linse und die im Strahlengang folgende Windschutzscheibe als virtuelles Bild im Blickfeld des Fahrzeugbenutzers dargestellt wird. Das reale Bild wird mittels einer Flüssigkristall-Matrix im inneren einer Projektionseinheit am Fahrzeugdach erzeugt.

Aus der US 4,908,611 ist eine Projektionseinheit in einem Fahrzeug bekannt, bei der eine Bildinformation über Spiegel in der Mittelkonsole des Fahrzeugs in Richtung eines Betrachters umgelenkt wird, so dass für den Betrachter ein virtuelles Bild sichtbar ist.

Aus der FR 726094 A1 ist eine Projektionseinrichtung für ein virtuelles Bild bekannt, die an einem Fahrzeugdach angeordnet ist und deren Licht über einen an der Instrumententafel angeordneten Parabolspiegel in Richtung eines Betrachters umgelenkt wird, so dass für den Betrachter ein virtuelles Bild entsteht.

### Vorteile der Erfindung

Die erfindungsgemäße Anzeigevorrichtung mit den Merkmalen des Hauptanspruchs hat demgegenüber den Vorteil, dass anstelle des virtuellen Bildes ein reelles Bild erzeugt wird. Durch die Projektion eines reellen Bildes kann eine bei einer Projektion eines virtuellen Bildes auftretende Bildverzerrung vermieden werden, da das reelle Bild vorzugsweise aus mehreren Richtungen sichtbar direkt auf eine Anzeigefläche projiziert wird. Besonders vorteilhaft ist dabei, eine Projektionsvorrichtung platzsparend an einem Fahrzeugdach oder an einem Fahrzeuginnenspiegel anzuordnen. Hierbei ist vorteilhaft, dass für die Projektion des reellen Bildes eine Projektion auf eine Anzeigefläche außerhalb der Windschutzscheibe vorgenommen wird, da hierdurch eine Abdeckung der ansonsten lediglich spiegelnden bzw. durchlässigen Windschutzscheibe z.B. mit einer lichtstreuenden Folie für eine Projektion des reellen Bildes nicht erforderlich ist. Besonders vorteilhaft ist weiterhin, dass durch die Anordnung der Projektionseinheit an dem Fahrzeugdach bzw. an dem Fahrzeuginnenspiegel keine typenspezifische Ausgestaltung des Fahrzeug-Dashboards mit einer Aufnahme einer Projektionseinheit in die Dashboard-Einheit erforderlich ist.

Ferner ist es vorteilhaft, die Anzeigefläche halbkugelförmig auszuführen. Hierdurch wird eine Bilddarstellung über einen weiten Raumwinkel ermöglicht. So kann ein Bild beispielsweise von einem Fahrer und einem Beifahrer des Fahrzeugs eingesehen werden.

Durch die in den Unteransprüchen aufgeführten Maßnahmen sind vorteilhafte Weiterbildungen und Verbesserungen der im Hauptanspruch angegebenen Anzeigevorrichtung möglich. Besonders vorteilhaft ist, an der Anzeigefläche eine Strukturierung anzuordnen. Durch diese Strukturierung wird das auf die Anzeigefläche gelenkte Licht in eine Vorzugsrichtung gelenkt. Diese Vorzugsrichtung ist die Blickrichtung eines Betrachters, so z.B. eines Fahrers des Fahrzeugs. Hierdurch kann die Leistung des auf die Anzeigefläche gestrahlten Lichtes bei unveränderter Ablesehelligkeit vermindert werden. Weiterhin kann durch eine gezielte Lichtumlenkung z.B. eine Blendung von Gegenverkehr oder eines Beifahrers ausgeschlossen werden.

Weiterhin ist vorteilhaft, die Anzeigefläche mit einer aufgerauten Oberfläche auszubilden, da hierdurch bei einer hinreichenden Körnung der Aufrauung eine gute Ablesbarkeit des reellen Bildes ermöglicht wird.

Weiterhin ist vorteilhaft, die Anzeigefläche mit einer holografisch eingebrachten Struktur auszuführen, durch die eine effiziente, verlustarme Lichtumlenkung möglich ist.

Weiterhin ist vorteilhaft, an der Anzeigefläche eine Oberfläche mit einer Prismen- und/oder Sägezahnstruktur anzuordnen, durch die Licht effizient in eine ausgewählte Richtung umlenkbar ist.

Weiterhin ist vorteilhaft, die Anzeigefläche als eine erste und eine zweite Teilfläche auszuführen, wobei durch die erste Teilfläche Licht zu einem ersten Betrachter und durch die zweite Teilfläche Licht zu einem zweiten Betrachter umlenkbar ist, so dass es für zwei Betrachter der Anzeigevorrichtung möglich ist, unterschiedliche Bilder zu betrachten. Während z.B. ein zweiter Betrachter ein Unterhaltungsprogramm betrachtet, werden einem ersten Betrachter, z.B. dem Fahrer, Informationen über das Fahrzeug angezeigt, z.B. die Fahrzeuggeschwindigkeit oder die Motordrehzahl.

Weiterhin ist vorteilhaft, die Projektionseinheit mit einer Laserstrahlerzeugungseinheit zu versehen und ein Bild durch Laserstrahlen zu erzeugen, wobei eine Ablenkung der Laserstrahlen in bevorzugter Weise durch Spiegel erfolgt. Hierdurch ist ein helles, reelles Bild erzeugbar. Außerdem kann auf eine Linsenoptik zur Bilderzeugung und Projektion in der Projektionseinheit verzichtet werden.

Weiterhin ist vorteilhaft, den Projektionsweg ungefähr parallel zu der Windschutzscheibe vorzusehen, da in einem Bereich nahe der Windschutzscheibe der Lichtweg im Allgemeinen nicht durch einen Benutzer des Fahrzeugs unterbrochen wird.

### Zeichnung

Ausführungsbeispiele der Erfindung sind in der Zeichnung dargestellt und in der nachfolgenden Beschreibung näher erläutert. Es zeigen Figur 1 eine Anzeigevorrichtung in einem Fahrzeug, Figur 2 ein weiteres Ausführungsbeispiel für eine Anzeigevorrichtung, Figur 3 eine Anordnung verschiedener elektronischer Elemente einer erfindungsgemäßen Anzeigevorrichtung, Figur 4 ein erstes Ausführungsbeispiel für eine Projektionseinheit, Figur 5 ein weiteres Ausführungsbeispiel für eine Projektionseinheit, Figuren 6a und 6b ein Ausführungsbeispiel für eine erfindungsgemäße Ausgestaltung einer Anzeigefläche, Figuren 7a und 7b ein weiteres, Ausführungsbeispiel für eine Anzeigefläche.

### Beschreibung des Ausführungsbeispiels

Die erfindungsgemäße Anzeigevorrichtung kann zur Anzeige verschiedener Bilder und Daten in einem Fahrzeug verwendet werden. Neben Fahrzeugparametern, wie z.B. Motordrehzahl, Fahrzeuggeschwindigkeit und/oder Umgebungstemperatur des Fahrzeugs, kann auch das Bild einer Kamera, z.B. das Bild einer Rück- und/oder Seitenkamera sowie das Bild einer Infrarotkamera dargestellt werden. Insbesondere die Anzeige des von der Infrarotkamera aufgenommenen Bildes ermöglicht es einem Fahrzeugbenutzer, auch bei schlechten Sichtverhältnissen, wie z.B. Nebel oder Dunkelheit, sich einen guten Überblick über den Fahrweg zu verschaffen. Weiterhin kann die Anzeigevorrichtung auch als Ausgabeeinheit einer Navigationsvorrichtung einer Anzeige einer zu fahrenden Fahrstrecke dienen. In einer bevorzugten Ausführungsform ist eine Anzeigefläche zumindest in der Nähe der Windschutzscheibe angeordnet und dabei von einem Fahrer des Fahrzeugs bzw. von einem Beifahrer ablesbar. Weiterhin ist auch eine Anordnung einer erfindungsgemäßen Anzeigevorrichtung in der Weise möglich, dass ein Passagier, der sich nicht in der ersten Sitzreihe des Fahrzeugs befindet, die Anzeige ablesen kann, indem z.B. eine Anzeigefläche direkt vor dem Sitz eines Benutzers angeordnet ist. Hierzu ist lediglich erforderlich, eine entsprechende Projektionseinheit für diese Anzeigefläche an geeigneter Stelle des Fahrzeugdachs vorzusehen.

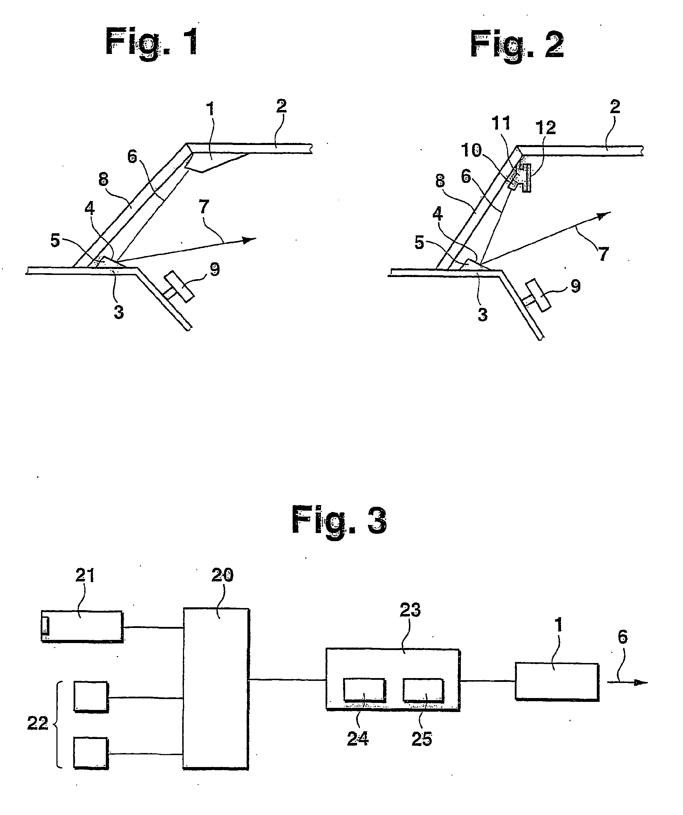

In der Figur 1 ist ein erstes Ausführungsbeispiel gezeigt, bei dem eine Projektionseinheit 1 an einem Fahrzeugdach 2 angeordnet ist. An einer Instrumententafel 3 ist eine Anzeigefläche 4 an einer Halterung 5 angeordnet. Ein Lichtstrahl 6, der von der Projektionseinheit 1 zu der Anzeigefläche 4 gestrahlt wird, wird durch die Anzeigefläche 4 in Richtung eines Benutzers umgelenkt, die durch eine Pfeilspitze 7 dargestellt ist. Die Instrumententafel 3 schließt einerseits an eine Windschutzscheibe 8 an, die von der Instrumententafel 3 zu dem Fahrzeugdach 2 verläuft. Die Instrumententafel 3 umschließt ein in der Figur 1 nicht näher gezeigtes Dashboard des Fahrzeugs. An der Instrumententafel 3 ist ferner ein Lenkrad 9 angeordnet.

Die Projektionseinheit 1 ist in einem bevorzugten Ausführungsbeispiel fest an das Fahrzeugdach 2 montiert. Eine Spannungsversorgungsleitung und eine Datenleitung, durch die die anzuzeigenden Bilddaten an die Projektionseinheit 1 übermittelt werden, sind in der Figur 1 nicht dargestellt. In einem bevorzugten Ausführungsbeispiel sind die Spannungsversorgungsleitung und die Datenleitung für einen Benutzer nicht sichtbar in das Fahrzeugdach 2 integriert und werden von dem Fahrzeugdach aus durch einen Türholm geführt. Der Lichtstrahl 6, der von der Projektionseinheit 1 zu der Anzeigefläche 4 führt, verläuft ungefähr parallel zu der Windschutzscheibe 8. In diesen Bereich wird ein Fahrer im Allgemeinen nicht eingreifen, so dass der Lichtstrahl 6 nicht durch den Fahrer unterbrochen wird. Die Anzeigefläche 4 ist in einem ersten Ausführungsbeispiel als eine streuende Anzeigefläche ausgeführt, die z.B. durch Aufrauhen einer Oberfläche eines transparenten Kunststoffmaterials dargestellt wird. Die Anzeigefläche 4 ist dabei eine möglichst weiße Fläche mit hoher Reflexion, die in einem ersten Ausführungsbeispiel mit einem Oberflächenmaterial bedeckt ist, das ungefähr Eigenschaften eines Lambertschen Strahlers aufweist. Die Anzeigefläche 4 wird dabei in einem bevorzugten Ausführungsbeispiel durch eine geeignete Folie gebildet, die auf die Halterung 5 aufgelegt wird. Die Halterung 5 ist ferner in seinem Neigungswinkel verstellbar, so dass die Richtung des Beobachters (Pfeilspitze 7) durch eine Neigung der Halterung 5 auf Augenhöhe des Beobachters eingestellt werden kann. In einem weiteren, bevorzugten Ausführungsbeispiel ist die Anzeigefläche 4 mit einer Folie belegt, die eine gerichtete Abstrahlung des Lichts erlaubt. Hierdurch wird vermieden, dass z.B. Licht in Richtung der Windschutzscheibe abgestrahlt wird.

In der Figur 2 ist ein weiteres Ausführungsbeispiel für eine Anzeigevorrichtung dargestellt. Gleiche Bezugszeichen bezeichnen hier und im folgenden die gleichen Elemente. Eine Projektionseinheit 10 ist bei dem in der Figur 2 dargestellten Ausführungsbeispiel an einem Innenspiegel 11 angeordnet. Eine Spiegelfläche 12 des Innenspiegels 11 ist dabei auf einer der Windschutzscheibe 8 abgewandten Seite des Innenspiegels 11 angeordnet. Die Spiegelfläche 12 verdeckt dabei möglichst weitgehend die Projektionseinheit 10 für einen Benutzer, so dass die Projektionseinheit 1 für einen Benutzer des Fahrzeugs nicht sichtbar ist und damit nicht stört.

In der Figur 3 ist eine elektrische Schaltung einer erfindungsgemäßen Anzeigevorrichtung dargestellt. Von einer Steuereinheit 20 werden Signale einer Videokamera 21 und von Fahrzeugsensoren 22 erfasst. Die Signale der Videokamera 21 und der Fahrzeugsensoren 22 werden in der Steuereinheit 20 verarbeitet und zur Anzeige an eine Bildverarbeitungseinheit 23 weitergeleitet. Die Bildverarbeitungseinheit 23 verfügt in einem bevorzugten Ausführungsbeispiel über eine digitale Filter- und Berechnungseinheit 24, durch die die von der Videokamera 21 aufgenommenen Bildsignale gegebenenfalls digital nachbearbeitet werden und durch die die von den Fahrzeugsensoren 22 ermittelten Fahrzeuggrößen, z.B. die Fahrzeuggeschwindigkeit, die Motordrehzahl und/oder die Außentemperatur, in eine Bilddarstellung umgerechnet werden. Ferner verfügt die Bildverarbeitungseinheit 23 über eine Ansteuerungseinheit 25, die Bilddaten an die Projektionseinheit 1 übermittelt und die Projektionseinheit 1 steuert. Die Videokamera 21 ist dabei in einem bevorzugten Ausführungsbeispiel hinter einem Kühlergrill an der Vorderseite des Fahrzeugs angeordnet, so dass unauffällig eine Beobachtung des Fahrraums vor dem Fahrzeug möglich ist. In einem weiteren Ausführungsbeispiel ist die Videokamera 21 im Innenraum des Fahrzeugs vorzugsweise im Bereich des Innenspiegels angeordnet, so dass eine Beobachtung des Fahrwegs von dem Innenraum des Fahrzeugs aus erfolgt. Die Fahrzeugsensoren 22 sind an dafür vorgesehenen und geeigneten Stellen im Fahrzeug angeordnet. Die Steuereinheit 20 und die Bildverarbeitungseinheit 23 sind in einem bevorzugten Ausführungsbeispiel in dem Dashboard des Fahrzeugs oder in dem Fahrzeugdach 2 angeordnet. In einem bevorzugten Ausführungsbeispiel ist die Videokamera 21 als eine Infrarotkamera ausgeführt, durch die auch bei schlechten Sichtverhältnissen wie Dunkelheit und/oder Nebel eine Bildaufnahme möglich ist.

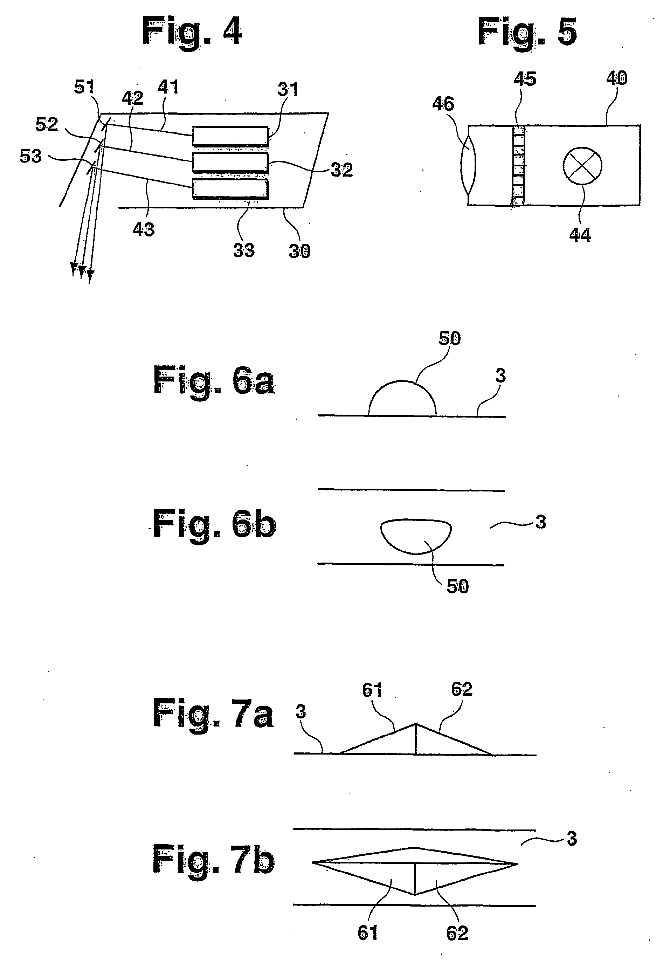

In der Figur 4 ist ein erstes Ausführungsbeispiel für eine Projektionseinheit 1 dargestellt. In einem Gehäuse 30 sind eine erste Lasereinheit 31, eine zweite Lasereinheit 32 und eine dritte Lasereinheit 33 angeordnet. Die erste Lasereinheit 31 erzeugt rotes, die zweite Lasereinheit 32 grünes und die dritte Lasereinheit 33 blaues Licht. Die Lasereinheiten sind in einem bevorzugten Ausführungsbeispiel als Halbleiterlaser oder als Festkörperlaser ausgebildet. Ein erster Laserstrahl 41 der ersten Lasereinheit 31 ist auf einen ersten Spiegel 51 strahlbar, durch den der erste Laserstrahl 41 in Richtung der Anzeigefläche 4 umgelenkt wird. Ebenso ist der zweite Laserstrahl 42 auf einen zweiten Spiegel 52 und der dritte Laserstrahl 43 auf einen dritten Spiegel 53 lenkbar. Die Spiegel 51, 52, 53 sind vorzugsweise über Piezoelemente in ihrem Neigungswinkel in zwei Raumrichtungen um in der Ebene des jeweiligen Spiegels liegende Drehachsen veränderbar, so dass mittels der Spiegel eine Abtastung der Anzeigefläche 4 durch die Laserstrahlen 41, 42 und 43 gewährleistet ist. Durch die Verwendung der drei Farben rot, grün und blau ist dabei die Erzeugung eines farbigen Bildes möglich. In einem in der Zeichnung nicht dargestellten Ausführungsbeispiel ist es auch möglich, anstelle der drei in Figur 4 gezeigten Lasereinheiten 31, 32, 33 nur eine Lasereinheit in einer bestimmten Farbe zu verwenden. Hierdurch ist eine monochrome Anzeige in der bestimmten Farbe möglich. In einem weiteren, in der Zeichnung nicht dargestellten Ausführungsbeispiel erfolgt die Lichtumlenkung mit einem mikromechanischen Spiegeldisplay (DMD = Digital Mirror Display).

In der Figur 5 ist ein weiteres Ausführungsbeispiel für eine Projektionseinheit gezeigt. In einem Gehäuse 40 ist eine vorzugsweise weißes Licht abstrahlende Lichtquelle 44, z.B. eine Halogenlichtquelle, angeordnet. Das Licht der Lichtquelle 44 ist durch eine Flüssigkristallzelle 45 und durch eine Linse 46 in Richtung der Anzeigefläche 4 abstrahlbar. Die Flüssigkristallzelle 45 weist einzelne Bildpunkte auf, die durch eine in der Figur 5 nicht gezeigte elektrische Ansteuerung in ihrer Lichttransmission beeinflussbar sind. Durch die entsprechende Ansteuerung der Bildpunkte ist dabei durch die Flüssigkristallzelle 45 ein Bild erzeugbar. Der Abstand der Flüssigkristallzelle 45 zu der Linse 46 ist in Zusammenhang mit der Brennweite der Linse 46 so gewählt, dass eine Abbildung des von der Flüssigkristallzelle 45 erzeugten Bildes auf die Anzeigefläche 4 erfolgt. Sowohl die in der Figur 4 als auch die in der Figur 5 gezeigte Projektionseinheit kann als eine Projektionseinheit 1 am Fahrzeugdach bzw. als eine Projektionseinheit 10 an einem Innenspiegel verwendet werden.

Die Anzeigefläche 4 ist in einem ersten Ausführungsbeispiel als eine ebene Fläche ausgeführt. Dabei ist die Anzeigefläche 4 in einem in der Zeichnung nicht dargestellten Ausführungsbeispiel durch eine Abdeckklappe vor Verschmutzung oder Beschädigung schützbar.

In der Figur 6a und in der Figur 6b ist ein erfindungsgemäßes Ausführungsbeispiel für eine halbkugelförmige Anzeigefläche 50 dargestellt. Die halbkugelförmige Anzeigefläche 50 ist als eine halbkugelförmige Erhebung über der Instrumententafel 3 ausgeführt. In der Figur 6a ist eine Ansicht aus der Richtung des Betrachters in der Höhe der Instrumententafel 3 dargestellt. In der Figur 6b ist eine Aufsicht aus der Position der Projektionseinheit 1 bzw. 10 auf die halbkugelförmige Anzeigefläche 50 dargestellt. Durch die halbkugelförmige Ausführung ist eine Bilddarstellung über einen weiten Raumwinkel möglich. Ein Bild kann hierdurch sowohl von einem Fahrer des Fahrzeugs als auch von einem Beifahrer eingesehen werden. Ferner ist auch möglich, dass ein weiter hinten im Fahrzeug sitzender Fahrgast die halbkugelförmige Anzeigefläche 50 ablesen kann, die vorzugsweise mit einer lichtstreuenden Folie oder einer lichtstreuenden Schicht bedeckt ist. Damit die halbkugelförmige Ausführung nicht zu einer Verzerrung der Bilddarstellung führt, erfolgt in einem bevorzugten Ausführungsbeispiel in der Bildverarbeitungseinheit 23 eine vorhergehende, rechnerische Entzerrung des Bildes, bei der die Projektion auf die halbkugelförmige Anzeigefläche 50 berücksichtigt wird.

In den Figuren 7a und 7b ist eine Anzeigefläche in eine erste Teilfläche 61 und eine zweite Teilfläche 62 aufgeteilt. In der Figur 7a ist eine Ansicht auf die Teilflächen 61 und 62 aus einer der Höhe der Instrumententafel 3 entsprechenden Betrachterhöhe dargestellt. In der Figur 7b ist eine Aufsicht aus der Position der Projektionseinheit 1 bzw. 10 dargestellt.

Auf die erste Teilfläche 61 ist ein Bild für einen Fahrer und auf die zweite Teilfläche 62 ein Bild für einen Beifahrer projizierbar, so dass unterschiedliche Bilder für den Fahrer bzw. den Beifahrer angezeigt werden können. Neben einer in der Figur 7a bzw. 7b dargestellten Ausführung von Teilflächen mit einer dreieckigen Grundfläche ist auch möglich, Teilflächen mit einer rechteckigen oder trapezförmigen Anzeigefläche vorzusehen bzw. die Teilflächen beanstandet auszuführen.

## Patentansprüche

1. Anzeigevorrichtung für ein Fahrzeug mit einer Projektionseinheit (1, 10) und mit einer Anzeigefläche (4), wobei die Projektionseinheit (1, 10) an einem Fahrzeugdach (2) und/oder an einem Innenspiegel (11) des Fahrzeugs angeordnet ist, wobei die Anzeigefläche (4, 50) lichtstreuend und halbkugelförmig als eine halbkugelförmige Erhebung über der Instrumententafel des Fahrzeugs ausgeführt ist, wobei von der Projektionseinheit (1, 10) ein reelles Bild auf die Anzeigefläche (4, 50) projiziert wird und wobei das Licht von der Anzeigefläche unmittelbar in Richtung (7) eines Fahrers des Fahrzeugs umgelenkt wird.

2. Anzeigevorrichtung nach einem der vorhergehenden Ansprüche, **dadurch gekennzeichnet, dass** an der Anzeigefläche (4) eine Strukturierung (83) angeordnet ist und dass durch die Strukturierung (83) projiziertes Licht umlenkbar ist.

3. Anzeigevorrichtung nach Anspruch 2, **dadurch gekennzeichnet, dass** die Strukturierung als eine Aufrauung der Anzeigefläche ausgebildet ist.

4. Anzeigevorrichtung nach einem der vorhergehenden Ansprüche, **dadurch gekennzeichnet, dass** die Projektionseinheit (1, 10) ein Videoprojektor ist.

5. Anzeigevorrichtung nach einem der vorhergehenden Ansprüche, **dadurch gekennzeichnet, dass** eine Lichtquelle der Projektionseinheit eine Laserstrahlerzeugungseinheit (31, 32, 33) ist.

6. Anzeigevorrichtung nach Anspruch 5, **dadurch gekennzeichnet, dass** in der Projektionseinheit (1, 10) bewegliche Spiegel (51, 52, 53) angeordnet sind und dass das Licht der Laserstrahlerzeugungseinheit (31, 32, 33) durch die beweglichen Spiegel (51, 52, 53) ablenkbar ist.

7. Anzeigevorrichtung nach einem der vorhergehenden Ansprüche, **dadurch gekennzeichnet, dass** mehrere Lichtquellen (31, 32, 33) unterschiedlicher Farbe in der Projektionseinheit angeordnet sind.

8. Anzeigevorrichtung nach einem der vorhergehenden Ansprüche, **dadurch gekennzeichnet, dass** der Weg des projizierten Lichts von der Projektionseinheit (1, 10) zu der Anzeigefläche (4) zumindest ungefähr parallel zu einer Windschutzscheibe (8) des Fahrzeugs ist.

## Claims

1. Display device for a vehicle, having a projection unit (1, 10) and a display surface (4), the projection unit (1, 10) being arranged on a vehicle roof (2) and/or on an interior mirror (11) of the vehicle, the display surface (4, 50) being of light-scattering and hemispherical design in the form of a hemispherical elevation above the dashboard of the vehicle, the projection unit (1, 10) projecting a real image onto the display surface (4, 50), and the light from the display surface being immediately deflected in the direction (7) of a driver of the vehicle.

2. Display device according to one of the preceding claims, **characterized in that** a structuring (83) is arranged on the display surface (4), and **in that** the structuring (83) can deflect projected light.

3. Display device according to Claim 2, **characterized in that** the structuring is in the form of a roughening of the display surface.

4. Display device according to one of the preceding claims, **characterized in that** the projection unit (1, 10) is a video projector.

5. Display device according to one of the preceding claims, **characterized in that** a light source of the projection unit is a laser beam generating unit (31, 32, 33).

6. Display device according to Claim 5, **characterized in that** movable mirrors (51, 52, 53) are arranged in the projection unit (1, 10), and **in that** the light from the laser beam generating unit (31, 32, 33) can be deflected by the movable mirrors (51, 52, 53).

7. Display device according to one of the preceding claims, **characterized in that** a plurality of light sources (31, 32, 33) of different colours are arranged in the projection unit.

8. Display device according to one of the preceding claims, **characterized in that** the path of the projected light from the projection unit (1, 10) to the display surface (4) is at least approximately parallel to a windscreen (8) of the vehicle.

## Revendications

1. Dispositif d'affichage pour un véhicule avec une unité de projection (1, 10) et avec une surface d'affichage (4), dans lequel l'unité de projection (1, 10) est agencée à un toit de véhicule (2) et/ou à un miroir intérieur (11) du véhicule, dans lequel la surface d'affichage (4, 50), diffusant la lumière et de forme hémisphérique, se présente sous la forme d'une surélévation hémisphérique au-dessus du tableau de bord du véhicule, dans lequel une image réelle est projetée sur la surface d'affichage (4, 50) par l'unité de projection (1, 10) et dans lequel la lumière est déviée immédiatement par la surface d'affichage en direction (7) d'un conducteur du véhicule.

2. Dispositif d'affichage selon la revendication 1, **caractérisé en ce que** la surface d'affichage (4) est dotée d'une structuration (83) et **en ce qu'**une lumière projetée peut être déviée par la structuration (83).

3. Dispositif d'affichage selon la revendication 2, **caractérisé en ce que** la structuration est réalisée sous la forme d'une rugosité de la surface d'affichage.

4. Dispositif d'affichage selon l'une quelconque des revendications précédentes, **caractérisé en ce que** l'unité de projection (1, 10) est un projecteur vidéo.

5. Dispositif d'affichage selon l'une quelconque des revendications précédentes, **caractérisé en ce qu'**une source de lumière de l'unité de projection est une unité de production de faisceau laser (31, 32, 33).

6. Dispositif d'affichage selon la revendication 5, **caractérisé en ce que** des miroirs mobiles (51, 52, 53) sont disposés dans l'unité de projection (1, 10) et **en ce que** la lumière de l'unité de production de faisceau laser (31, 32, 33) peut être déviée par les miroirs mobiles (51, 52, 53).

7. Dispositif d'affichage selon l'une quelconque des revendications précédentes, **caractérisé en ce que** plusieurs sources de lumière (31, 32, 33) de couleur différente sont disposées dans l'unité de projection.

8. Dispositif d'affichage selon l'une quelconque des revendications précédentes, **caractérisé en ce que** le chemin de la lumière projetée par l'unité de projection (1, 10) vers la surface d'affichage (4) est au moins approximativement parallèle à un pare-brise (8) du véhicule.
